# EUROPEAN PATENT SPECIFICATION

(11) **EP 2 949 138 B1**
(45) Date of publication and mention of the grant of the patent: **14.08.2019**
(21) Application number: 14743618.2
(22) Date of filing: 18.01.2014
(51) Int. Cl.: H04W 8/00, H04W 84/12, H04N 5/225, G06F 3/12, H04N 1/00

(54) **COMMUNICATION APPARATUS, METHOD OF CONTROLLING THE SAME, AND PROGRAM**
KOMMUNIKATIONSVORRICHTUNG, VERFAHREN ZUR STEUERUNG DAVON UND PROGRAMM
APPAREIL DE COMMUNICATION, PROCÉDÉ DE COMMANDE ASSOCIÉ, ET PROGRAMME

(30) Priority: 23.01.2013 JP 2013010297
(43) Date of publication of application: 02.12.2015
(73) Proprietor: Canon Kabushiki Kaisha, Tokyo 146-8501 (JP)
(72) Inventor: MORITOMO, Kazuo, Tokyo 146-8501 (JP)
(74) Representative: Uffindell, Christine Helen
(86) International application number: PCT/JP2014/000233
(87) International publication number: WO 2014/115524

(56) References cited:
- WO-A1-2010/001687
- JP-A- 2004 328 272
- JP-A- 2007 274 567
- US-A1- 2004 104 995
- US-A1- 2007 201 073
- US-A1- 2007 264 991

## Description

### [Technical Field]

The present invention relates to a communication apparatus, a method of controlling the communication apparatus, and a program.

### [Background Art]

Installation of a wireless local area network (LAN) station function on an electronic device, such as a digital still camera (hereinafter referred to as a DSC) or a printer, and connection of the electronic device to a wireless LAN as a communication apparatus for use are realized in an increased number of cases in recent years. For example, PTL 1 discloses a method of installing the wireless LAN function on a DSC to facilitate image sharing.

PTL 2 discloses communicating with a printer using a first layer and a second layer that is higher than the first layer and disconnecting communication with the printer when a print process is finished.

US2007/264991 discloses searching for a service before establishing of a connection to a device and, in the case of detection of a device providing the desired service, connecting to the device to obtain information necessary for executing the service and executing said service.

Wi-Fi Alliance has established Wi-Fi Direct (registered trademark) (hereinafter referred to as Wi-Fi Direct) standard. In the Wi-Fi Direct, a protocol is defined in which electronic devices mutually determine which electronic device operates as a wireless LAN access point and which electronic devices operate as wireless LAN stations. Execution of this protocol automatically determines the electronic device functioning as the wireless LAN access point and the electronic devices functioning as the wireless LAN stations. This allows the electronic devices to be directly wirelessly connected to each other even if the wireless LAN access point does not exist in advance.

Furthermore, it is possible to use a function, such as an inquiry function of Bluetooth (registered trademark), to check attributes, such as device types (for example, a camera, a printer, and a mobile device) and device names, of neighboring electronic devices before the wireless communication. Combination of this function allows the attributes of an electronic device to be connected, among neighboring electronic device candidates at the other end of the connection, to be identified before a wireless connection process is executed.

As described above, the identification of the attributes of a communication partner before the wireless connection allows an electronic device used by a user to detect an electronic device at the other end of the wireless connection and to be directly wirelessly connected to the detected device. However, this method has the following problems.

Attribute information detected by a device detection function in a state in which the electronic device is not wirelessly connected, such as the inquiry function of Bluetooth (registered trademark), is restricted in the amounts of information that are transmitted and received in terms of wireless resource sharing and often does not contain detailed information. For example, a case in which the user prints an image stored in the own terminal will now be described. The user uses the device detection function to search for a "printer" used to perform the printing before the wireless connection. Even if the printer is detected in this processing, the print service type that is to be used is not confirmed at this point, among various print service types including Internet Printing Protocol (IPP), PictBridge (Standard of the Camera & Imaging Products Association), and Digital Living Network Alliance (DLNA) (registered trademark).

Accordingly, when mismatch occurs between the terminal used by the user and the detected printer in the print service type that is installed, the printing process may not be executed even if the terminal used by the user is wirelessly connected to the detected printer.

### [Citation List]

### [Patent Literature]

[PTL 1]
   Japanese Patent Laid-Open No. 2011-35768
[PTL 2]
   PCT publication No. WO 2010/001687

### [Summary of Invention]

The present invention provides reduction of inconvenience caused by mismatch in process type between apparatuses. For example, the attributes of the apparatuses and the types of the processes capable of being executed in the apparatuses having the detected attributes are detected to suppress the occurrence of a state in which a certain process is disabled even with the apparatuses connected to each other. The present invention will be described in detail with reference to the attached drawings.

A communication apparatus according to an embodiment is provided according to claim 1. Furthermore, a method of controlling a communication apparatus and a computer-readable recording medium are provided according to claims 15 and 16.

Further features of the present invention will become apparent from the following description of exemplary embodiments with reference to the attached drawings.

### [Brief Description of Drawings]

Fig. 1 illustrates an exemplary configuration of a system according to a first embodiment.
Fig. 2 is a block diagram illustrating an exemplary functional configuration in a DSC in Fig. 1.
Fig. 3 is a flowchart in the DSC in the first embodiment.
Fig. 4 is a sequence chart in the DSC in the first embodiment.
Fig. 5 is a flowchart in the DSC in a second embodiment.

### [Description of Embodiments]

### [First Embodiment]

Embodiments of the present invention will herein be described with reference to the attached drawings. Although an example will be described in which a wireless LAN system is used in accordance with IEEE 802. 11 standard, the communication mode is not limited to the above one. A first embodiment is characterized in that a DSC is directly wirelessly connected to a printer and that image data about the DSC and information necessary for printing are directly wirelessly transmitted to the printer to realize desired printing.

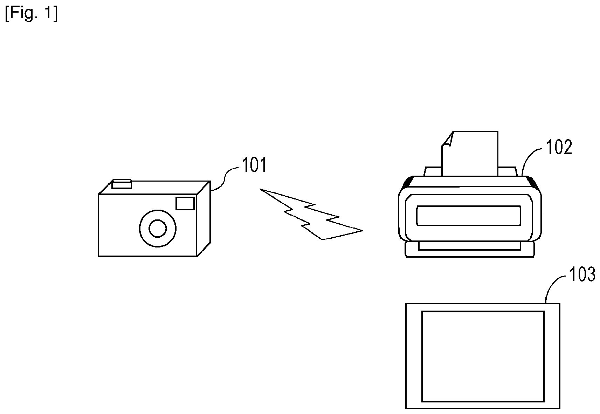

Fig. 1 illustrates an exemplary configuration of a system according to the first embodiment. A DSC 101, a printer 102, and a display 103 are each provided with a station function conforming to the IEEE 802.11 standard. Since the DSC 101, the printer 102, and the display 103 are also each provided with an access point function, each of the DSC 101, the printer 102, and the display 103 is capable of functioning as a base station in a wireless network. Furthermore, the DSC 101, the printer 102, and the display 103 support the Wi-Fi Direct. Accordingly, the DSC 101, the printer 102, and the display 103 automatically determine participation in the wireless network (the station function) and building of the wireless network (a base station function) by executing the Wi-Fi Direct protocol. The DSC 101, the printer 102, and the display 103 each operate by using either of the functions, which is determined, for wireless connection and wireless communication. Although the access point (the base station) is also called an owner in the Wi-Fi Direct, the access point is called the base station in the following description. Although the station is called a client in the Wi-Fi Direct, the word "station" is used in the following description. When the Wi-Fi Direct is used for connection between apparatuses, communication parameters are supplied from the base station to the station and the connection is achieved by using the communication parameters. The communication parameters include various wireless communication parameters for the wireless communication according to the IEEE 802.11 standard. Specifically, the communication parameters include the wireless communication parameters, such as a Service Set Identifier (SSID) used as a network identifier, an encryption method, an encryption key, an authentication method, and an authentication key, which are necessary for wireless LAN communication. The communication parameters include Internet protocol (IP) addresses and so on for communication on an IP layer.

Furthermore, the DSC 101, the printer 102, and the display 103 are each provided with a device search function for detecting the attribute of each neighboring wireless device even in a state in which the DSC 101, the printer 102, and the display 103 do not participate in the wireless network, that is, for detecting information indicating that the device is the DSC, the printer, or the display. In the first embodiment, the DSC 101 executes a search process in which the device search function is executed in the state in which the DSC 101 does not participate in the wireless network to inquire of a printer that supports wireless printing. Upon reception of the inquiry with the device search function, the printer 102 returns a response indicating that the printer 102 is a printer supporting the wireless printing.

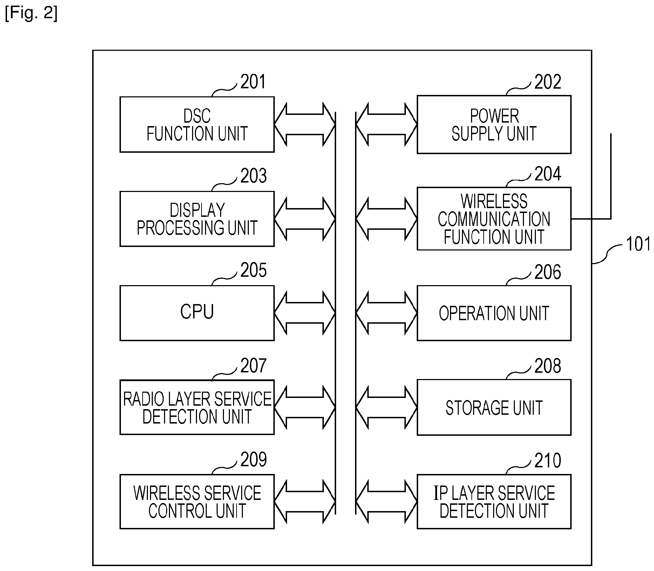

Fig. 2 is a block diagram illustrating an exemplary functional configuration of a wireless terminal in the DSC 101. Referring to Fig. 2, a DSC function unit 201 is a block that practically functions as a DSC to process functions including image capturing, correction of a captured image, and compression. A detailed description of the functions is omitted herein. A power supply unit 202 supplies power to function units, such as the DSC function unit and a wireless communication function unit, which are necessary for the DSC 101 to operate. A display processing unit 203 is a block that controls the content of display for a user, such as liquid crystal display (LCD) display, light emitting diode (LED) display, or audio representation, concerning a wireless function and various operations of the DSC and that displays the content of display in a display unit as information. Operations including a setting operation concerning the wireless function and the various operations of the DSC are performed by the display processing unit 203 in cooperation with an operation unit 206. When the DSC 101 supports a touch panel, the display processing unit 203 may be integrated with the operation unit 206. The display processing unit 203 also displays information indicating, for example, the connection state (during connection or disconnected) of the wireless connection with an apparatus that is wirelessly connected in the display unit.

A wireless communication function unit 204 is a block for controlling the wireless function in accordance with the IEEE 802.11 standard. The Wi-Fi Direct is also controlled by the wireless communication function unit 204. The operation unit 206 includes a setting button giving a trigger to start the wireless printing with the printer 102 described below. The blocks concerning the image capturing and the wireless function are processed by a central processing unit (CPU) 205. Programs controlled by the CPU 205 are stored in a storage unit 208, which is a random access memory (RAM), a flash read only memory (ROM), or a memory card. Data processed by the CPU 205 is also written into the storage unit 208 and is read out from the storage unit 208. A radio layer service detection unit 207 executes device service search for detecting the attribute information about the neighboring wireless devices even in the state in which the DSC 101 does not participate in the wireless network described above. Specifically, the radio layer service detection unit 207 executes a process of detecting the attribute of another apparatus on a first communication layer, that is, a first detection process. In the following description, the radio layer service detection unit 207 searches for the attribute information about a wireless device to detect the wireless device, such as a printer, a display, a camera, or a telephone.

An IP layer service detection unit 210 executes a process of detecting the type of a process capable of being executed by another apparatus on a second communication layer, that is, a second detection process. In the following description, the IP layer service detection unit 210 detects a service (a process type) provided by the apparatus at the other end of the wireless connection, which is detected by the radio layer service detection unit 207, by Transmission Control Protocol/Internet Protocol (TCP/IP) communication. The device service search executed by the radio layer service detection unit 207 is performed in accordance with a protocol defined for the execution of the device service search on a radio layer. The device service search executed by the IP layer service detection unit 210 is performed in accordance with a protocol defined on a layer (the IP layer in the following description) higher than that of the device service search executed by the radio layer service detection unit 207. In the search for a print service, the IP layer service detection unit 210 searches for and detects a print service (print type), such as a PictBridge service or a network print service described below. In addition, the IP layer service detection unit 210 searches for and detects the type of the network print service, for example, a service using an Internet Printing Protocol (IPP) or a service using a protocol defined by Digital Living Network Alliance (DLNA). Furthermore, in the search for a display service type, the IP layer service detection unit 210 searches for and detects, for example, a still image display service or a video streaming service. In other words, the IP layer service detection unit 210 searches for and detects a process type when a certain process is executed. Alternatively, the IP layer service detection unit 210 searches for and detects a protocol type used in the execution of the certain process. The IP layer service detection unit 210 is only an example and the service search may be performed in accordance with a protocol defined on another network layer, a session layer, or an application layer to detect a device that provides a certain service (the process type or the protocol type).

A wireless service control unit 209 disconnects the connection with an apparatus that is connected in accordance with the result of the detection by the IP layer service detection unit 210. In addition, the wireless service control unit 209 executes a process for executing a certain process (service) with an apparatus that is connected in accordance with the result of the detection by the IP layer service detection unit 210. In the following description, the wireless service control unit 209 executes a process to perform the print service or the display service with an apparatus that is connected.

The wireless service control unit 209 determines a printing method by which the DSC executes the printing process on the basis of the printing method detected by the IP layer service detection unit 210 for the printer detected by the radio layer service detection unit 207. This will be described in detail below.

The printer 102 supports the device service search executed by the radio layer service detection unit 207 and the IP layer service detection unit 210. Accordingly, the printer 102 is provided with the device search function for detecting the attribute information about neighboring wireless devices even in the state in which the printer 102 does not participate in the wireless network. In addition, the printer 102 is in a state in which, upon occurrence of a wireless connection request from another device, the printer 102 is capable of executing a response process to the wireless connection request. In the present embodiment, upon occurrence of a wireless connection process based on the Wi-Fi Direct, the printer 102 is capable of automatically executing the wireless connection process.

In the system illustrated in Fig. 1, the DSC 101 directly wirelessly communicates with the printer 102 to attempt to print image data. A wireless printing method with the convenience of the user improved is realized in this process.

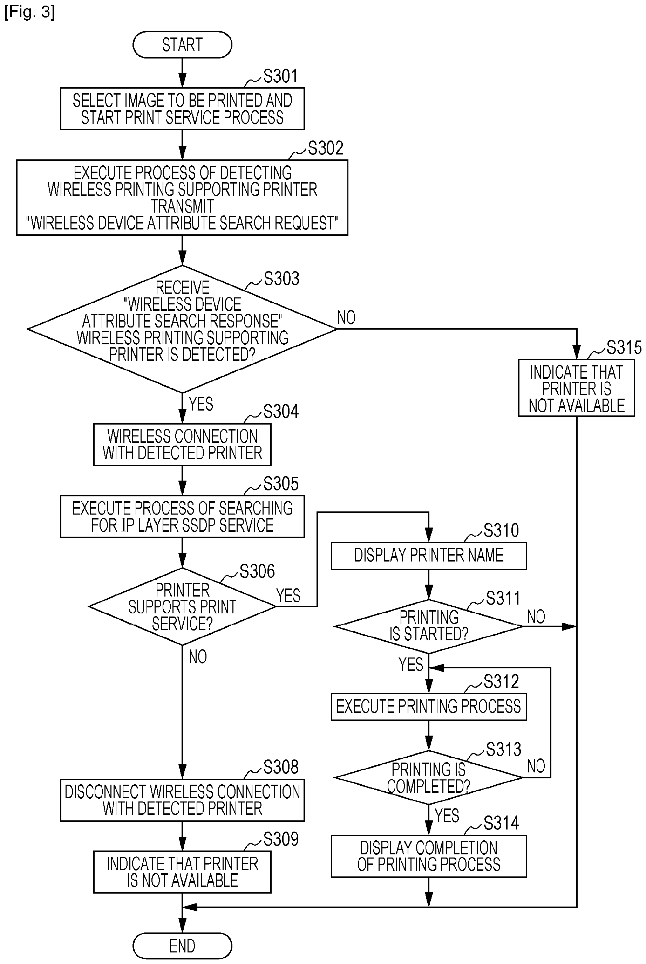

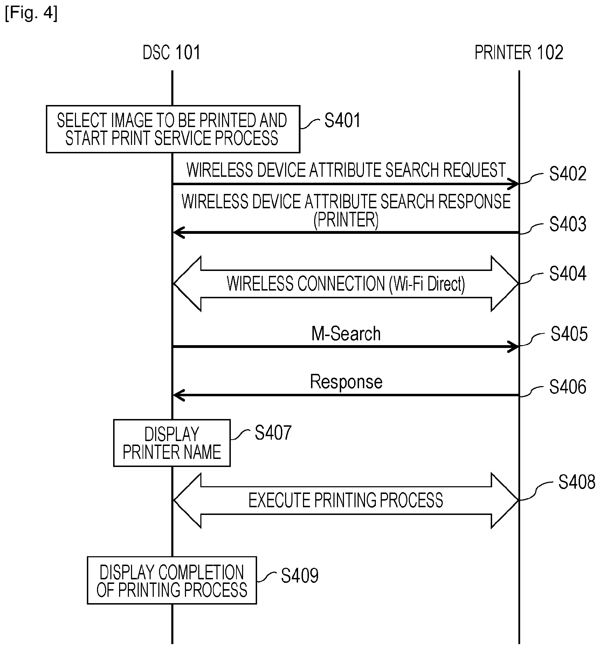

A specific wireless printing method will now be described in detail with reference to a flowchart in Fig. 3 and a sequence chart in Fig. 4. The user of the DSC 101 attempts to print image data stored in the DSC 101. Specifically, the user of the DSC 101 selects an image to be printed with the display processing unit 203 and the operation unit 206 to start a print service process (Step S301 and Step S401) . In response to the operation, the radio layer service detection unit 207 in the DSC 101 starts to transmit a "wireless device attribute search request" in order to start a device detection process to detect any wireless printing supporting printer that exists around the DSC 101 (Step S302 and Step S402). Probe Request, which is a search signal defined in the IEEE 802.11, is used as the wireless device attribute search request in this description. The Probe Request includes pieces of information including a physical address (hereinafter referred to as a Media Access Control (MAC) address) of the own device, a MAC address of a specified or unspecified device at the other end of the wireless connection, wireless frequency information, a device type, a service type to be searched for, and/or an encryption method.

Since the printer that has received the "wireless device attribute search request" is the wireless printing supporting printer, the printer returns a "wireless device attribute search response" in order to indicate that the printer that has received the "wireless device attribute search request" is the wireless printing supporting printer (Step S303 and Step S403) .

Probe Response, which is a search signal response defined in the IEEE 802. 11, is used as the wireless device attribute search response in this description. The Probe Response includes pieces of information including a MAC address of the own printer, a MAC address of a device at the other end of the wireless connection, wireless frequency information, a device type, a service type to be searched for, and/or an encryption method.

If the DSC 101 does not receive the wireless device attribute search response from the printer 102 or does not detect the wireless output supporting printer in the response (No in Step S303), the display processing unit 203 indicates that the printer is not available in the display unit (Step S315) . This error display is an example of first display. Alternatively, the display processing unit 203 may indicate that no printer is detected. If the DSC 101 receives the "wireless device attribute search response", the radio layer service detection unit 207 recognizes that the printer 102 is the wireless printing supporting printer (Yes in Step S303) . The wireless communication function unit 204 in the DSC 101 starts the wireless connection process with the printer 102 (Step S304 and Step S404) . The wireless connection process here is executed on the basis of a protocol defined in the Wi-Fi Direct, and one of the devices serves as the base station and the other thereof serves as the station for the wireless connection.

Either of the DSC 101 and the printer 102 may be started as the access point (the base station) without using the Wi-Fi Direct in the wireless connection process and the wireless connection process may be executed in the access point-station relationship. The wireless connection process may be executed in an ad hoc mode defined in the IEEE 802.11. A detailed description of the connection process based on the Wi-Fi Direct standard is omitted herein.

Upon completion of the wireless connection process, the IP layer service detection unit 210 in the DSC 101 starts a process of searching for a print service that is available in the printer 102 via communication on the IP layer (Step S305) . The DSC 101 executes the printing process on the basis of the print service according to a "PictBridge" printing standard. The DSC 101 uses, for example, a Simple Service Discovery Protocol (SSDP), which is a search communication protocol on the IP layer and which is defined by Universal Plug and Play (UPnP), as the method of searching for a print service. The DSC 101 transmits a message called M-Search of the SSDP in order to confirm whether the printer 102 provides the "PictBridge" service (Step S305 and Step S405) . The IP layer service detection unit 210 in the DSC 101 determines whether the printer at the other end of the wireless connection supports the print service on the IP layer (Step S306). In the determination in Step S306, it is determined whether a response is returned and, if a response is returned, it is determined whether an available service type is included in the response.

Provided that the printer 102 does not provide the "PictBridge" service, the printer 102 does not respond to the M-Search or transmits a response (Response) that does not include information indicating that the "PictBridge" service is provided (Step S406). The printer 102 may transmit a response (Response) that includes information indicating that the "PictBridge" service is not provided. Since no response to the M-search is returned or the information indicating that the "PictBridge" service is provided is not included in the response, the DSC 101 determines that the printer 102 does not provide the "PictBridge" service. If the IP layer service detection unit 210 determines that the printer 102 does not provide the "PictBridge" service (No in Step S306), the wireless service control unit 209 in the DSC 101 cancels the wireless connection process with the printer 102 to disconnect the wireless connection with the printer 102 (Step S308). The display processing unit 203 indicates that the wireless printing supporting printer is detected but the printer is not available in the display unit (Step S309). This error display is an example of third display. Although the fact that the printer is not available is indicated as an example, the same effect is achieved by error notification, display of an error code, error notification with an LED, or audio error notification. In addition to the above display methods, a user interface may be displayed with which the user selects execution or non-execution of re-search. Provided that the DSC 101 receives a response indicating that the printer 102 is provided with, for example, another service in which the printer 102 realizes the printing while sharing a printer on the network (hereinafter referred to as "network print"), instead of the "PictBridge" service, the display processing unit 203 may indicate that the other "network print" service is available in the display unit (Step S309) . The indication includes a message indicating that the other service may be continuously executed without executing the disconnection of the wireless connection in Step S308 in this case. This eliminates the necessity to return back to Step S301 to advantageously shorten the connection time.

If the DSC 101 receives the response indicating that the printer 102 is provided with the network print from the printer 102, the IP layer service detection unit 210 in the DSC 101 may determine that the printer 102 supports the print service in Step S306. In this case, the display processing unit 203 indicates that the other "network print" service is available in the display unit. If the printer 102 provides the "PictBridge" service, the printer 102 returns a message called Response of the SSDP, indicating that the printer 102 provides the "PictBridge" service, to indicate that the printer 102 provides the "PictBridge" service to the DSC 101 (Step S306 and Step S406) . The IP layer service detection unit 210 in the DSC 101, which has received the Response from the printer 102, determines that the printing process is capable of being executed (Yes in Step S306) . The display processing unit 203 indicates that the DSC 101 is in a state in which the DSC 101 is wirelessly connected to the printer 102 and also indicates the device name of the printer 102 as the printer name in the display unit (Step S310 and Step S407). This display is an example of second display indicating the connection state. The user confirms the printer used for the printing from the displayed information to execute the printing process (Steps S311 to S314 and Step S408). Specifically, upon instruction of start of printing by the user (Yes in Step S311), the wireless service control unit 209 transmits an image to be printed to the printer 102 to cause the printer 102 to execute the printing (Step S312) . Upon completion of the printing (Yes in Step S313), the display processing unit 203 indicates that the printing process is completed in the display unit (Step S314 and Step S409).

Although the search is performed with the service, such as the "PictBridge" service or the "network print" service, being specified in the M-Search of the SSDP in the above description, a method is effective in which "ssdp: all" is specified as the search method to search for all the services at a time. In this case, a method is adopted in which the detected service is selected in the DSC 101 to select a desired print service.

With the method described above, upon selection of an image to be printed and start of the printing process, since the DSC 101 detects the wireless printing supporting printer and confirms the matching of the print service, it is possible to print desired image data. In addition, since the fact that the printing is disabled is indicated to the user if the print service is not matched even when the wireless printing supporting printer is detected, the convenience of the user is improved.

### [Second Embodiment]

The case in which the printing is specified as the output method is described in the first embodiment described above. In a second embodiment, application of services will be described in a case in which the device at the other end of the wireless connection is a device having a still image display function and/or a device capable of displaying not only a still image but also a video stream (a movie), that is, in a case in which the device at the other end of the wireless connection supports different media formats. The services include a still image display service and a video stream display service. The display of a still image is an example of a first certain type, among process types which an apparatus is capable of executing, and the display of a video stream (a movie) is an example of a second certain type.

A system according to the second embodiment has an exemplary configuration similar to that of the first embodiment. In the second embodiment, the printer 102 is replaced with the display 103. The block diagram of the DSC 101 of the second embodiment is the same as the one illustrated in Fig. 2. In the second embodiment, the radio layer service detection unit 207 detects a display and the IP layer service detection unit 210 detects a display service of the available display device. Since the wireless device attribute search response to the wireless device attribute search request from the DSC 101 is the same as the one described above for the printer 102, a description of the wireless device attribute search response is omitted herein. The DSC 101 of the second embodiment performs the processing in the first embodiment when the printing process is selected by the user.

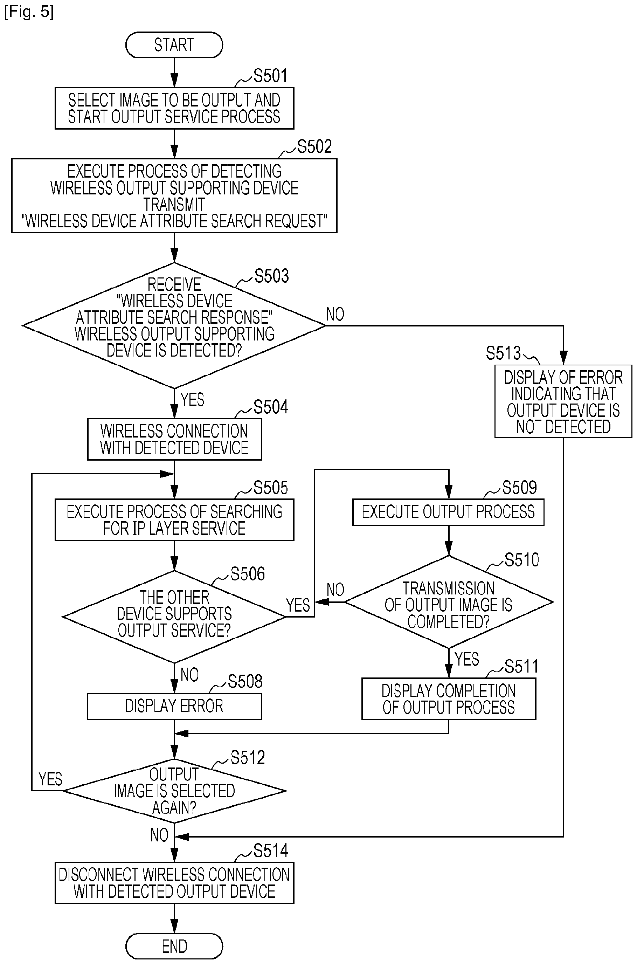

A specific method according to the second embodiment will now be described in detail with reference to a flowchart in Fig. 5.

The user of the DSC 101 attempts to display still image data or video stream data stored in the DSC 101. Specifically, the user of the DSC 101 selects a still image or a movie to be displayed with the display processing unit 203 and the operation unit 206 to start a display service process (Step S501). In response to the operation, the radio layer service detection unit 207 in the DSC 101 starts to transmit the "wireless device attribute search request" in order to start a device detection process to detect any wireless output supporting display that exists around the DSC 101 (Step S502) . The Probe Request, which is a search signal defined in the IEEE 802.11, is used as the wireless device attribute search request in this description. The Probe Request includes pieces of information including a physical address (a MAC address) of the own device, a MAC address of a specified or unspecified device at the other end of the wireless connection, wireless frequency information, a device type, a service type to be searched for, and/or an encryption method.

Since the display that has received the "wireless device attribute search request" is the wireless output supporting display, the display returns the "wireless device attribute search response" in order to indicate that the display that has received the "wireless device attribute search request" is the wireless output supporting display (Step S503). The Probe Response, which is a search signal response defined in the IEEE 802.11, is used as the wireless device attribute search response in this description. The Probe Response includes pieces of information including a MAC address of the own display, a MAC address of a device at the other end of the wireless connection, wireless frequency information, a device type, a service type to be searched for, and/or an encryption method.

If the DSC 101 does not receive the wireless device attribute search response from the display 103 or does not detect the wireless output supporting device in the response (No in Step S503), the display processing unit 203 indicates that the output device (the display) is not detected in the display unit (Step S513). If the DSC 101 receives the "wireless device attribute search response", the radio layer service detection unit 207 recognizes that the display 103 is the wireless output supporting display (Yes in Step S503). The wireless communication function unit 204 in the DSC 101 starts the wireless connection process with the display 103 (Step S504) . The Wi-Fi Direct is used for the wireless connection process and either of the DSC 101 and the display 103 servers as the base station and the other thereof serves as the station for the wireless connection. Either of the DSC 101 and the display 103 may be started as the access point (the base station) without using the Wi-Fi Direct in the wireless connection process and the wireless connection process may be executed in the access point-station relationship. The wireless connection process may be executed in the ad hoc mode defined in the IEEE 802.11.

Upon completion of the wireless connection process, the IP layer service detection unit 210 in the DSC 101 starts a process of searching for an output service that is available in the display 103 via communication on the IP layer (Step S505) . The DSC 101 executes a still image output process. The DSC 101 uses, for example, the SSDP, which is a search communication protocol on the IP layer and which is defined by the UPnP, as the method of searching for a still image output service. The DSC 101 transmits a message called M-Search of the SSDP in order to confirm whether the display 103 provides the still image output service (Step S505). The IP layer service detection unit 210 in the DSC 101 determines whether the display at the other end of the wireless connection supports the still image output service on the IP layer (Step S506). In the determination in Step S506, it is determined whether a response is returned and, if a response is returned, it is determined whether an available service type is included in the response.

Provided that the display 103 does not provide the still image output service, the display 103 does not respond to the M-Search or transmits a response (Response) that does not include information indicating that the still image output service is provided. The display 103 may transmit a response (Response) that includes information indicating that still image output service is not provided.

Since no response to the M-search is returned or the information indicating that the still image output service is provided is not included in the response, the IP layer service detection unit 210 in the DSC 101 determines that the display 103 does not provide the still image output service (No in Step S506) . The display processing unit 203 in the DSC 101 displays the error in the display unit (Step S508) . The DSC 101 determines whether the output image is selected again (Step S512). If the output image is not selected again (No in Step S512), the DSC 101 disconnects the wireless connection with the detected output device (Step S514) . If the output image is selected again (Yes in Step S512), the process goes back to Step S505. Although the output image is selected again in Step S512, the DSC 101 is capable of processing not only the still image but also the video stream. Accordingly, the DSC 101 may support the video stream even if the display 103 does not support the still image or the still image display service is not currently available in the display 103. In such a case, since the DSC 101 is not capable of applying the output of the still image to the device at the other end of the wireless connection, the selection process may be restricted with the display processing unit 203 or the operation unit 206 so that the still image is not selected.

The IP layer service detection unit 210 in the DSC 101 executes the service detection process on the IP layer in order to use the output service of the video stream again (Step S505) . When the display 103 does not provide the still image output service, the IP layer service detection unit 210 may automatically detect a video stream output service because the DSC 101 is capable of processing the video stream. If a response indicating that the video stream output service is available in the display 103 is received from the display 103 (Yes in Step S506), the wireless service control unit 209 in the DSC 101 executes a video output process (video data transmission) (Step S509) and waits for completion of the transmission of the video output (Step S510) . Upon completion of the transmission of the video output (Yes in Step S510), the display processing unit 203 indicates that the output process is completed in the display unit (Step S511) . When the display 103 provides the still image output service, a response including information indicating that the display 103 supports the still image output service is returned. If it is determined that the display 103 supports the still image output service from the response, the wireless service control unit 209 in the DSC 101 transmits an image to be displayed to the display 103 for display of the still image to execute the output process (Step S509). Upon completion of the output process (Yes in Step S510), the display processing unit 203 indicates that the output process is completed in the display unit (Step S511).

### [Other Embodiments]

As described above, it is possible to switch the image output service with the media format that processes not only the still image but also the video. In addition, if a media format is not supported, the selection of the media format is restricted on the user interface to allow the user to easily determine whether the output is enabled, thereby contributing the improvement of the user friendliness.

The embodiments of the present invention may be realized by executing the following processing. Specifically, software that realizes the functions of the above embodiments is supplied to a system or an apparatus via a network or various storage media and the computer (or a central processing unit (CPU) or a microprocessor unit (MPU)) in the system or the apparatus reads out and executes the software. The software is an exemplary computer program.

According to the present invention, it is possible to reduce inconvenience caused by mismatch in process type between apparatuses.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiments of the present invention, and by a method performed by the computer of the system or apparatus by, for example, reading out and executing the computer executable instructions from the storage medium to perform the functions of one or more of the above-described embodiments. The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

## Claims

1. A communication apparatus (101)comprising:
a first detection unit (207) configured to detect a device type of another communication apparatus (102) using a search signal conforming to IEEE 802.11 standard without connecting to a wireless network where the communication apparatus and the other communication apparatus communicate;
a connection unit (204) configured to execute a wireless connection process conforming to Wi-Fi Direct standard with the other communication apparatus having a certain device type detected by the first detection unit so as to communicate with the other communication apparatus on the wireless network using an Internet Protocol, IP, layer;
a second detection unit (210) configured to detect, using an M-Search message of the Simple Service Discovery Protocol in the IP layer a process type which indicates , from among services being executable by the other communication apparatus having the certain device type and being connected by the connection unit, a service provided by the other communication apparatus; and
a controlling unit (205) configured to perform, based on a result of the detection by the second detection unit, disconnecting (S308) of a wireless connection conforming to the Wi-Fi Direct standard with the other communication apparatus, or a process (S312) which relates to the process type with the other communication apparatus.

2. The communication apparatus according to Claim 1, wherein the connection unit executes a process for determining an apparatus serving as a base station, among the communication apparatus and the other communication apparatus.

3. The communication apparatus according to Claim 1, further comprising:
an execution unit (209) configured to, if a certain process type is detected by the second detection unit, execute a process which relates to the certain process type with the other communication apparatus.

4. The communication apparatus according to Claim 1, wherein, if a first certain process type is not detected, the second detection unit executes a process of detecting a second certain process type.

5. The communication apparatus according to Claim 1, further comprising:
a first display unit (203) configured to, if another communication apparatus having the certain device type is not detected by the first detection unit, display an error.

6. The communication apparatus according to Claim 1, further comprising:
a second display unit (203) configured to, if a certain process type is detected by the second detection unit, display a connection state with the other communication apparatus.

7. The communication apparatus according to Claim 1, further comprising:
a third display unit (203) configured to, if a certain process type is not detected by the second detection unit, display an error.

8. The communication apparatus according to Claim 1, wherein, if the device type of the other communication apparatus detected by the first detecting unit is the certain device type for an output process, the connection unit executes the wireless connection process conforming to the Wi-Fi Direct standard with the other communication apparatus.

9. The communication apparatus according to Claim 8, wherein the second detection unit executes a process for detecting a process type of the output process.

10. The communication apparatus according to Claim 1, wherein the first detection unit and the second detection unit each execute the detection process by wireless communication.

11. The communication apparatus according to Claim 1, wherein, if the device type of the other apparatus detected by the first detection unit is a printer, the connection unit executes the wireless connection process conforming to the Wi-Fi Direct standard with the other communication apparatus.

12. The communication apparatus according to Claim 1, wherein the second detection unit executes a process for detecting a print service type as the process type.

13. The communication apparatus according to Claim 1, wherein, if the device type of the other apparatus detected by the first detecting unit is a display, the connection unit executes the wireless connection process conforming to the Wi-Fi Direct Standard with the other communication apparatus.

14. The communication apparatus according to Claim 1, wherein the second detection unit executes a process for detecting a display service type of a service which is provided by the other communication apparatus as the process type .

15. A method of controlling a communication apparatus (101), the method comprising:
detecting a device type of another communication apparatus (102) using a search signal conforming to IEEE 802.11 standard without connecting to a wireless network where the communication apparatus and the other communication apparatus communicate;
executing a wireless connection process conforming to Wi-Fi Direct standard with the other communication apparatus having a certain device type so as to communicate with the other communication apparatus on the wireless network using an Internet Protocol, IP, communication layer;
detecting, using an M-Search message of the Simple Service Discovery Protocol in the IP layer, a process type which indicates , from among services being executable by the other communication apparatus having the certain device type and being connected by the connection unit, a service provided by the other communication; and
performing, based on a result of the detection on the second communication layer, disconnecting (S308) of a wireless connection conforming to the Wi-Fi Direct standard with the other communication apparatus, or a process (S312) which relates to the process type with the other communication apparatus.

16. A computer-readable recording medium storing a computer program comprising code means adapted to perform all the steps of the method of claim 15, when executed on a computer.

## Patentansprüche

1. Kommunikationsvorrichtung (101), umfassend:
eine erste Detektionseinheit (207), konfiguriert zum Detektieren eines Devicetyps einer anderen Kommunikationsvorrichtung (102) unter Verwendung eines dem IEEE 802.11 Standard entsprechenden Suchsignals, ohne sich mit einem Drahtlosnetz zu verbinden, in dem die Kommunikationsvorrichtung und die andere Kommunikationsvorrichtung kommunizieren;
eine Verbindungseinheit (204), konfiguriert zum Ausführen eines dem Wi-Fi Direct Standard entsprechenden Drahtlosverbindungsvorgangs mit der anderen Kommunikationsvorrichtung, die einen durch die erste Detektionseinheit detektierten gewissen Devicetyp aufweist, um mit der anderen Kommunikationsvorrichtung im Drahtlosnetz unter Verwendung eines Internet-Protokoll-(IP)-Layers zu kommunizieren;
eine zweite Detektionseinheit (210), konfiguriert zum Detektieren, unter Verwendung einer M-Search-Nachricht des Simple Service Discovery Protocols (SSDP) in der IP-Layer, eines Vorgangstyps, der einen durch die andere Kommunikationsvorrichtung bereitgestellten Dienst angibt, aus den Diensten, die durch die andere durch die Verbindungseinheit verbundene Kommunikationsvorrichtung mit dem gewissen Devicetyp ausführbar sind; und
eine Steuerungseinheit (205), die konfiguriert ist zum Durchführen, basierend auf einem Ergebnis der Detektion durch die zweite Detektionseinheit, einer Verbindungstrennung (S308) einer dem Wi-Fi Direct Standard entsprechenden Drahtlosverbindung mit der anderen Kommunikationsvorrichtung, oder eines Vorgangs (S312), der sich auf den Vorgangstyp mit der anderen Kommunikationsvorrichtung bezieht.

2. Kommunikationsvorrichtung nach Anspruch 1, wobei die Verbindungseinheit einen Vorgang ausführt, um aus den Kommunikationsvorrichtungen und der anderen Kommunikationsvorrichtung eine als eine Basisstation dienende Vorrichtung zu bestimmen.

3. Kommunikationsvorrichtung nach Anspruch 1, ferner umfassend:
eine Ausführungseinheit (209), die konfiguriert ist, falls ein gewisser Vorgangstyp durch die zweite Detektionseinheit detektiert wird, einen Vorgang auszuführen, der sich auf den gewissen Vorgangstyp mit der anderen Kommunikationsvorrichtung bezieht.

4. Kommunikationsvorrichtung nach Anspruch 1, wobei, falls ein erster gewisser Vorgangstyp nicht detektiert wird, die zweite Detektionseinheit einen Vorgang zum Detektieren eines zweiten gewissen Vorgangstyps ausführt.

5. Kommunikationsvorrichtung nach Anspruch 1, ferner umfassend:
eine erste Anzeigeeinheit (203), die konfiguriert ist, falls eine andere Kommunikationsvorrichtung mit dem gewissen Devicetyp durch die erste Detektionseinheit nicht detektiert wird, einen Fehler anzuzeigen.

6. Kommunikationsvorrichtung nach Anspruch 1, ferner umfassend:
eine zweite Anzeigeeinheit (203), die konfiguriert ist, falls ein gewisser Vorgangstyp durch die zweite Detektionseinheit detektiert wird, einen Verbindungszustand mit der anderen Kommunikationsvorrichtung anzuzeigen.

7. Kommunikationsvorrichtung nach Anspruch 1, ferner umfassend:
eine dritte Anzeigeeinheit (203), die konfiguriert ist, falls ein gewisser Vorgangstyp durch die zweite Detektionseinheit nicht detektiert wird, einen Fehler anzuzeigen.

8. Kommunikationsvorrichtung nach Anspruch 1, wobei, falls der durch die erste Detektionseinheit detektierte Devicetyp der anderen Kommunikationsvorrichtung der gewisse Devicetyp für einen Ausgabevorgang ist, die Verbindungseinheit den dem Wi-Fi Direct Standard entsprechenden Drahtlosverbindungsvorgang mit der anderen Kommunikationsvorrichtung ausführt.

9. Kommunikationsvorrichtung nach Anspruch 8, wobei die zweite Detektionseinheit einen Vorgang ausführt zum Detektieren eines Vorgangstyps des Ausgabevorgangs.

10. Kommunikationsvorrichtung nach Anspruch 1, wobei die erste Detektionseinheit und die zweite Detektionseinheit jeweils den Detektionsvorgang durch Drahtloskommunikation ausführen.

11. Kommunikationsvorgang nach Anspruch 1, wobei, falls der der durch die erste Detektionseinheit detektierte Devicetyp der anderen Vorrichtung ein Drucker ist, die Verbindungseinheit den dem Wi-Fi Direct Standard entsprechenden Drahtlosverbindungsvorgang mit der anderen Kommunikationsvorrichtung ausführt.

12. Kommunikationsvorrichtung nach Anspruch 1, wobei die zweite Detektionseinheit als den Vorgangstyp einen Vorgang zum Detektieren eines Druckdiensttyps ausführt.

13. Kommunikationsvorrichtung nach Anspruch 1, wobei, falls der durch die erste Detektionseinheit detektierte Devicetyp der anderen Vorrichtung ein Display ist, die Verbindungseinheit den dem Wi-Fi Direct Standard entsprechenden Drahtlosverbindungsvorgang mit der anderen Kommunikationsvorrichtung ausführt.

14. Kommunikationsvorrichtung nach Anspruch 1, wobei die zweite Detektionseinheit einen Vorgang ausführt zum Detektieren eines Displaydiensttyps eines Dienstes, der durch die andere Kommunikationsvorrichtung als der Vorgangstyp bereitgestellt wird.

15. Verfahren zum Steuern einer Kommunikationsvorrichtung (101), wobei das Verfahren umfasst:
Detektieren eines Devicetyps einer anderen Kommunikationsvorrichtung (102) unter Verwendung eines dem IEEE 802.11 Standard entsprechenden Suchsignals, ohne sich mit einem Drahtlosnetz zu verbinden, in dem die Kommunikationsvorrichtung und die andere Kommunikationsvorrichtung kommunizieren;
Ausführen eines dem Wi-Fi Direct Standard entsprechenden Drahtlosverbindungsvorgangs mit der anderen Kommunikationsvorrichtung, die einen gewissen Devicetyp aufweist, um mit der anderen Kommunikationsvorrichtung im Drahtlosnetz unter Verwendung eines Internet-Protokoll-(IP)-Kommunikationslayers zu kommunizieren;
Detektieren, unter Verwendung einer M-Search-Nachricht des Simple Service Discovery Protocols in der IP-Layer, eines Vorgangstyps, der einen durch die andere Kommunikation bereitgestellten Dienst angibt, aus den Diensten, die durch die andere durch die Verbindungseinheit verbundene Kommunikationsvorrichtung mit dem gewissen Devicetyp ausführbar sind; und
Durchführen, basierend auf einem Ergebnis der Detektion in der zweiten Kommunikationslayer, einer Verbindungstrennung (S308) einer dem Wi-Fi Direct Standard entsprechenden Drahtlosverbindung mit der anderen Kommunikationsvorrichtung, oder eines Vorgangs (S312), der sich auf den Vorgangstyp mit der anderen Kommunikationsvorrichtung bezieht.

16. Computerlesbares Aufzeichnungsmedium, das ein Computerprogramm speichert, das eine Codeeinrichtung umfasst, die ausgebildet ist zum Durchführen aller Schritte des Verfahrens nach Anspruch 15, bei Ausführung auf einem Computer.

## Revendications

1. Appareil de communication (101), comprenant :
une première unité de détection (207) configurée pour détecter un type de dispositif d'un autre appareil de communication (102) au moyen d'un signal de recherche conformément à la norme IEEE 802.11 sans connexion à un réseau sans fil sur lequel communiquent l'appareil de communication et l'autre appareil de communication ;
une unité de connexion (204) configurée pour exécuter un processus de connexion sans fil conformément à la norme Wi-Fi Direct avec l'autre appareil de communication comportant un certain type de dispositif détecté par la première unité de détection de façon à communiquer avec l'autre appareil de communication sur le réseau sans fil en faisant intervenir une couche de protocole Internet, IP ;
une seconde unité de détection (210) configurée pour détecter, au moyen d'un message M-Search du protocole de découverte de service simple de la couche d'IP, un type de processus qui indique, parmi des services pouvant être exécutés par l'autre appareil de communication comportant le certain type de dispositif et étant connecté par l'unité de connexion, un service fourni par l'autre appareil de communication ; et
une unité de commande (205) configurée pour exécuter, sur la base d'un résultat de la détection par la seconde unité de détection, une déconnexion (S308) d'une connexion sans fil conformément à la norme Wi-Fi Direct avec l'autre appareil de communication, ou un processus (S312) qui se rapporte au type de processus exécuté avec l'autre appareil de communication.

2. Appareil de communication selon la revendication 1, dans lequel l'unité de connexion exécute un processus permettant de déterminer un appareil assurant un service de station de base, parmi l'appareil de communication et l'autre appareil de communication.

3. Appareil de communication selon la revendication 1, comprenant en outre :
une unité d'exécution (209) configurée pour, si un certain type de processus est détecté par la seconde unité de détection, exécuter un processus qui se rapporte au certain type de processus avec l'autre appareil de communication.

4. Appareil de communication selon la revendication 1, dans lequel, si un premier certain type de processus n'est pas détecté, la seconde unité de détection exécute un processus de détection d'un second certain type de processus.

5. Appareil de communication selon la revendication 1, comprenant en outre :
une première unité d'affichage (203) configurée pour afficher une erreur dans la mesure où un autre appareil de communication comportant le certain type de dispositif n'est pas détecté par la première unité de détection.

6. Appareil de communication selon la revendication 1, comprenant en outre :
une deuxième unité d'affichage (203) configurée pour afficher un état de connexion avec l'autre appareil de communication dans la mesure où un certain type de processus est détecté par la seconde unité de détection.

7. Appareil de communication selon la revendication 1, comprenant en outre :
une troisième unité d'affichage (203) configurée pour afficher une erreur dans la mesure où un certain type de processus n'est pas détecté par la seconde unité de détection.

8. Appareil de communication selon la revendication 1, dans lequel, si le type de dispositif de l'autre appareil de communication détecté par la première unité de détection est le certain type de dispositif d'un processus de sortie, l'unité de connexion exécute le processus de connexion sans fil conformément à la norme Wi-Fi Direct avec l'autre appareil de communication.

9. Appareil de communication selon la revendication 8, dans lequel la seconde unité de détection exécute un processus permettant de détecter un type de processus du processus de sortie.

10. Appareil de communication selon la revendication 1, dans lequel la première unité de détection et la seconde unité de détection exécutent individuellement le processus de détection par une communication sans fil.

11. Appareil de communication selon la revendication 1, dans lequel, si le type de dispositif de l'autre appareil détecté par la première unité de détection est une imprimante, l'unité de connexion exécute le processus de connexion sans fil conformément à la norme Wi-Fi Direct avec l'autre appareil de communication.

12. Appareil de communication selon la revendication 1, dans lequel la seconde unité de détection exécute un processus permettant de détecter un type de service d'impression en tant que type de processus.

13. Appareil de communication selon la revendication 1, dans lequel, si le type de dispositif de l'autre appareil détecté par la première unité de détection est un dispositif d'affichage, l'unité de connexion exécute le processus de connexion sans fil conformément à la norme Wi-Fi Direct avec l'autre appareil de communication.

14. Appareil de communication selon la revendication 1, dans lequel la seconde unité de détection exécute un processus permettant de détecter un type de service d'affichage d'un service qui est fourni par l'autre appareil de communication en tant que type de processus.

15. Procédé de commande d'un appareil de communication (101), le procédé comprenant les étapes consistant à :
détecter un type de dispositif d'un autre appareil de communication (102) au moyen d'un signal de recherche conformément à la norme IEEE 802.11 sans connexion à un réseau sans fil sur lequel communiquent l'appareil de communication et l'autre appareil de communication ;
exécuter un processus de connexion sans fil conformément à la norme Wi-Fi Direct avec l'autre appareil de communication comportant un certain type de dispositif de façon à communiquer avec l'autre appareil de communication sur le réseau sans fil au moyen d'une couche de communication de protocole Internet, IP ;
détecter, au moyen d'un message M-Search du protocole de découverte de service simple de la couche IP, un type de processus qui indique, parmi des services pouvant être exécutés par l'autre appareil de communication comportant le certain type de dispositif et étant connecté par l'unité de connexion, un service fourni par l'autre appareil de communication ; et
exécuter, sur la base d'un résultat de la détection effectuée sur la seconde couche de communication, une déconnexion (S308) d'une connexion sans fil conformément à la norme Wi-Fi Direct avec l'autre appareil de communication, ou un processus (S312) qui se rapporte au type de processus avec l'autre appareil de communication.

16. Support d'informations lisible par ordinateur contenant en mémoire un programme d'ordinateur possédant un moyen formant code apte à mettre en oeuvre toutes les étapes du procédé de la revendication 15, lorsqu'il est exécuté sur un ordinateur.
